# EUROPÄISCHE PATENTANMELDUNG

(11) **EP 4 835 843 A1**
(43) Veröffentlichungstag der Anmeldung: **04.11.2026**
(21) Anmeldenummer: 26164423.1
(22) Anmeldetag: 12.03.2026
(51) Int. Cl.: G06V 20/56

(54) **VERFAHREN ZUR ERKENNUNG EINES EIGENSCHATTENS EINES KRAFTFAHRZEUGES, FAHRERASSISTENZSYSTEM FÜR EIN KRAFTFAHRZEUG UND KRAFTFAHRZEUG**

(30) Priorität: 29.04.2025 DE 102025116450
(71) Anmelder: Volkswagen Aktiengesellschaft, 38440 Wolfsburg (DE)
(72) Erfinder: Last, Carolin, 38440 Wolfsburg (DE); Göricke, Bastian, 38440 Wolfsburg (DE); Hüger, Philipp, 38440 Wolfsburg (DE); Beer, Robert, 38440 Wolfsburg (DE)

(57) **Zusammenfassung**

Es wird ein Verfahren (100) zur Erkennung eines Eigenschattens (10) eines Kraftfahrzeuges (200) vorgeschlagen, umfassend die Schritte
- Ermitteln einer geografischen Position und einer Ausrichtung des Kraftfahrzeuges (200),
- Erfassen mindestens eines Umgebungsbildes (17a, 17b) mittels mindestens einer Kamera (12) einer Kameraanordnung (11) des Kraftfahrzeuges (200),
- Ermitteln eines Sonnenstandes bezüglich der geografischen Position,
- Ermitteln, mittels einer Auswerteeinrichtung (13), aus dem mindestens einen Umgebungsbild (17a, 17b), ob ein Eigenschatten (10) des Kraftfahrzeuges (200) zu erwarten ist,
- Berechnen, mittels der Auswerteeinrichtung (13), eines prognostizierten Eigenschattens (25) des Kraftfahrzeuges (200) unter Verwendung des Sonnenstandes, der geographischen Position und der Ausrichtung des Kraftfahrzeuges (200), und von Informationen über die geometrische Form des Kraftfahrzeuges (200),
- Ermitteln, wenn ein Eigenschatten (10) zu erwarten ist, eines Eigenschattenkandidatens (28) in dem mindestens einen Umgebungsbild (17a, 17b) mittels der Auswerteeinrichtung (13) unter Verwendung des prognostizierten Eigenschattens (25),
- Verifizieren, dass der Eigenschattenkandidat (28) der Eigenschatten (10) des Kraftfahrzeuges (200) ist, durch Vergleich des Eigenschattenkandidatens (28) mit dem prognostizierten Eigenschatten (25) mittels der Auswerteeinrichtung (13).

## Beschreibung

Die vorliegende Erfindung betrifft ein Verfahren zur Erkennung eines Eigenschattens eines Kraftfahrzeuges umfassend die Schritte Ermitteln einer geografischen Position und einer Ausrichtung des Kraftfahrzeuges, Erfassen mindestens eines Umgebungsbildes mittels einer Kamera einer Kameraanordnung des Kraftfahrzeuges, Ermitteln eines Sonnenstandes bezüglich der geografischen Position und Berechnen, mittels einer Auswerteeinrichtung, eines prognostizierten Eigenschattens des Kraftfahrzeuges unter Verwendung des Sonnenstandes, der geografischen Position und der Ausrichtung des Kraftfahrzeuges, und von Informationen über die geometrische Form des Kraftfahrzeuges.

Ferner betrifft die vorliegende Erfindung ein Fahrerassistenzsystem für ein Kraftfahrzeug sowie ein Kraftfahrzeug umfassend ein Fahrerassistenzsystem.

Für viele kamerabasierte Fahrerassistenzsysteme stellt der Schattenwurf des Kraftfahrzeuges ein Problem dar, da er sich mit dem Kraftfahrzeug mitbewegt und je nach Fahrtrichtung verändert. Zum Beispiel kann es im Rahmen einer sogenannten Topview-Visualisierung in Einparkassistenzsystemen zu Artefakten kommen, wenn die Topview-Visualisierung aus mehreren Kamerabildern zusammengesetzt wird. Stitching-Effekte führen dann zu unnatürlichen Schattenwürfen. Generell kommt es bei Funktionen, die eine Historie von Kamerabildern benutzen, häufig zur Fehldetektionen aufgrund des Eigenschattens des Kraftfahrzeuges. Ein anderes Problem ist, dass der Eigenschatten aufgrund seiner Bewegung mit einem bewegten Objekt verwechselt werden kann, auf das ein Fahrerassistenzsystem gegebenenfalls fälschlich zum Beispiel mit einer Vollbremsung reagiert. Insbesondere bei starker Sonneneinstrahlung und einem damit verbundenen konstanten deutlichen Schattenwurf ergibt sich diese Problematik.

Aus der DE 10 2011 122 454 A1 ist ein Verfahren zum Betreiben einer wenigstens eine Kamera aufweisenden Kameraanordnung für ein Fahrzeug bekannt, bei welchem eine Position wenigstens einer Umgebungslichtquelle, deren Licht auf das Fahrzeug auftrifft, relativ zu dem Fahrzeug ermittelt wird, wobei mittels der wenigstens einen Kamera zumindest ein Bild erfasst wird, wobei mittels einer Auswerteeinrichtung der Kameraanordnung das zumindest eine Bild auf ein Vorhandensein wenigstens eines Schattens hin ausgewertet wird, wobei, wenn in dem Bild wenigstens ein Schatten vorhanden ist, ermittelt wird, ob der wenigstens eine Schatten vom Auftreffen des Lichts auf das Fahrzeug herrührt, wobei mittels der Auswerteeinrichtung der wenigstens eine Schatten mit einer Referenzinformation verglichen wird, wobei abhängig von dem wenigstens einen Schatten die Position der wenigstens einen Umgebungslichtquelle relativ zu dem Fahrzeug bestimmt wird.

Die JP 2011-065442 A offenbart eine Fahrzeugschattenerkennungsvorrichtung umfassend eine Fahrzeugumgebungsabbildungsvorrichtung, die den Bereich einschließlich der Straßenoberfläche abbildet, auf dem das Fahrzeug eines Benutzers fährt, eine Sonnenpositionsberechnungseinrichtung, die die durch die Einrichtung erhaltene Sonnenposition und die Informationen bezüglich des aktuellen Datums aus den Informationen über die aktuelle Position des Fahrzeugs berechnet, ein Fahrzeugschattenbereich-Schätzmittel, das einen Bereich schätzt, der durch das Fahrzeug abgeschattet wird, basierend auf der Vorwärtsrichtungsinformation des Fahrzeugs und der dreidimensionalen Forminformation des Fahrzeugs, und ein Fahrzeugschattenbereich-Erfassungsmittel, das einen Fahrzeugschattenbereich in einem Bild spezifiziert, das durch die Fahrzeugumgebungsabbildungsvorrichtung erhalten wird, auf der Basis der Koordinateninformation, die von dem Fahrzeugschattenbereich-Schätzmittel erhalten wird.

Fehlerquellen bei Verfahren zur Erkennung eines Eigenschattens eines Kraftfahrzeuges sind eine nicht korrekte Ermittlung des aktuellen Sonnenstandes oder eine Verdeckung der Sonne beispielsweise durch Wolken oder Gebäude. In solchen Fällen kann es vorkommen, dass der Eigenschatten nicht korrekt erkannt wird, beziehungsweise dass ein nicht von dem Egofahrzeug herrührender Schatten als Eigenschatten erkannt wird.

Der vorliegenden Erfindung liegt die Aufgabe zugrunde, ein Verfahren zur Erkennung eines Eigenschattens eines Kraftfahrzeuges bereitzustellen, mit dem die Erkennung eines Eigenschattens eines Kraftfahrzeuges verbessert wird.

Zur Lösung der der Erfindung zugrundeliegenden Aufgabe wird ein Verfahren zur Erkennung eines Eigenschattens eines Kraftfahrzeuges vorgeschlagen, umfassend die Schritte
- Ermitteln einer geografischen Position und einer Ausrichtung des Kraftfahrzeuges,
- Erfassen mindestens eines Umgebungsbildes mittels mindestens einer Kamera einer Kameraanordnung des Kraftfahrzeuges,
- Ermitteln eines Sonnenstandes bezüglich der geographischen Position,
- Ermitteln, mittels einer Auswerteeinrichtung, aus dem mindestens einen Umgebungsbild, ob ein Eigenschatten des Kraftfahrzeuges zu erwarten ist,
- Berechnen, mittels der Auswerteeinrichtung, eines prognostizierten Eigenschattens des Kraftfahrzeuges unter Verwendung des Sonnenstandes, der geografischen Position und der Ausrichtung des Kraftfahrzeuges, und von Informationen über die geometrische Form des Kraftfahrzeuges,
- Ermitteln, wenn ein Eigenschatten zu erwarten ist, eines Eigenschattenkandidatens in dem mindestens einen Umgebungsbild mittels der Auswerteeinrichtung unter Verwendung des prognostizierten Eigenschattens,
- Verifizieren, dass der Eigenschattenkandidat der Eigenschatten des Kraftfahrzeuges ist, durch Vergleich des Eigenschattenkandidatens mit dem prognostizierten Eigenschatten mittels der Auswerteeinrichtung.

Der Eigenschatten kann auch als Egoschatten bezeichnet werden und bezeichnet jenen in der Umgebung des Kraftfahrzeuges durch das Kraftfahrzeug aufgrund der Sonneneinstrahlung hervorgerufenen Schatten.

Ein zur Durchführung des Verfahrens eingerichtetes Kraftfahrzeug umfasst eine Kameraanordnung mit mindestens einer Kamera. Derartige Kameras sind in bekannten Kraftfahrzeugen für verschiedene Fahrzeugfunktionen verbaut. So sind für die Funktion von Fahrerassistenzsystemen Kameraanordnungen für die Beurteilung von Verkehrssituationen bekannt. Ferner umfassen modernde Kraftfahrzeuge Kameraanordnungen mit Kameras zur Erstellung sogenannter Topview-Darstellungen des Kraftfahrzeuges, beispielsweise für Parkassistenzsysteme.

Verfahrensgemäß wird mindestens ein Umgebungsbild mit mindestens einer Kamera der Kameraanordnung erfasst. Es ist jedoch auch möglich, dass mehrere Umgebungsbilder mittels mehrerer Kameras der Kameraanordnung erfasst werden.

Die Auswerteeinrichtung kann eine oder mehrere elektronische Rechenvorrichtungen umfassen und insbesondere eine CPU sowie einen Speicher aufweisen. Die Auswerteeinrichtung kann dabei zudem eine Auswerteeinrichtung des Kraftfahrzeuges sein und in diesem angeordnet sein. Ferner ist es möglich, dass die Auswerteeinrichtung eine externe Auswerteeinrichtung ist, welche mit einer Recheneinheit des Kraftfahrzeuges beispielsweise über eine Mobilfunkverbindung Daten austauschen kann.

Die geometrische Form des Kraftfahrzeuges ist bevorzugt in einem Speicher der Auswerteeinrichtung hinterlegt, und wird von dieser zum Berechnen des prognostizierten Eigenschattens aus dem Speicher abgerufen.

Erfindungsgemäß ist vorgesehen, dass mittels der Auswerteeinrichtung aus dem mindestens einen Umgebungsbild ermittelt wird, ob ein Eigenschatten des Kraftfahrzeuges zu erwarten ist. Situationen, in denen kein Eigenschatten des Kraftfahrzeuges zu erwarten ist, können unter anderem eine starke Wolkenbedeckung oder eine Verdeckung der Sonne durch Gebäude, Kraftfahrzeuge oder Infrastruktureinrichtungen in der Umgebung des Kraftfahrzeuges sein.

Erfindungsgemäß ist ferner vorgesehen, dass die Ermittlung eines Eigenschattenkandidatens in dem Umgebungsbild, bevorzugt nur, dann durchgeführt wird, wenn ein Eigenschatten zu erwarten ist. Mit anderen Worten wird, wenn kein Eigenschatten des Kraftfahrzeuges zu erwarten ist, kein Eigenschattenkandidat in dem Umgebungsbild ermittelt. Hierdurch können Fehldetektionen von nicht vom Kraftfahrzeug herrührenden Schatten als Eigenschatten vermieden werden. Es kann zudem vorgesehen sein, dass bereits der Schritt des Berechnens des prognostizierten Eigenschattens nur dann durchgeführt wird, wenn ermittelt wurde, dass ein Eigenschatten des Kraftfahrzeuges zu erwarten ist.

Bevorzugt ist vorgesehen, dass zur Ermittlung, ob ein Eigenschatten zu erwarten ist, ein Belichtungsvergleich zwischen mehreren Bereichen des mindestens einen Umgebungsbildes und/oder zwischen mehreren Umgebungsbildern durchgeführt wird.

Wenn das mit der mindestens einen Kamera der Kameraanordnung erfasste Umgebungsbild stark unterschiedlich belichtete Bereiche aufweist, oder wenn die mit mehreren Kameras der Kameraanordnung des Kraftfahrzeuges erfassten Umgebungsbilder stark unterschiedlich belichtet sind oder stark unterschiedlich belichtete Bereiche aufweisen, das heißt, dass Bereiche oder Umgebungsbilder im Vergleich mit anderen Bereichen oder anderen Umgebungsbildern überbelichtet sind, so kann darauf geschlossen werden, dass die Sonne scheint beziehungsweise dass die Sonne nicht durch Wolken, Gebäude oder Fahrzeuge verdeckt ist. Dies kann als dahingehend bewertet werden, dass ein Eigenschatten des Kraftfahrzeuges zu erwarten ist.

Ergibt der Belichtungsvergleich zwischen verschiedenen Bereichen des mindestens einen Umgebungsbildes oder zwischen den mehreren Umgebungsbildern, dass die Belichtung weitestgehend konstant ist, so kann dies darauf hindeuten, dass eine direkte Sonneneinstrahlung aufgrund einer Wolkenverdeckung oder umstehender Gebäude blockiert ist, und somit kein Eigenschatten des Kraftfahrzeuges zu erwarten ist. In diesem Fall wird nicht ermittelt, ob ein aus dem Umgebungsbild ermittelter Schatten der Eigenschatten des Kraftfahrzeuges ist, sodass Fehldetektionen von nicht vom Kraftfahrzeug herrührenden Schatten als Eigenschatten des Kraftfahrzeuges vermieden werden.

Bevorzugt ist vorgesehen, dass ein Eigenschatten zu erwarten ist, wenn aus dem mindestens einen Umgebungsbild ermittelt wird, dass sich kein Objekt auf einer Sichtlinie zwischen der Sonne und der geografischen Position des Kraftfahrzeuges befindet.

Ebenso kann auch vorgesehen sein, dass kein Eigenschatten zu erwarten ist, wenn aus dem mindestens einen Umgebungsbild ermittelt wird, dass sich ein Objekt auf einer Sichtlinie zwischen der Sonne und der geografischen Position des Kraftfahrzeuges befindet.

Beispielsweise kann mittels eines Bilderkennungsverfahrens aus dem Umgebungsbild ermittelt werden, ob die Sonne in dem Bildausschnitt des Umgebungsbildes erkennbar ist. Wird die Sonne in einem Umgebungsbild erkannt, so besteht eine freie Sichtlinie zwischen der Sonne und der geografischen Position des Kraftfahrzeuges, und es ist somit ein Eigenschatten des Kraftfahrzeuges zu erwarten.

Ist die Sonne nicht in dem Umgebungsbild oder den mehreren Umgebungsbildern ermittelbar, so kann dies darauf hinweisen, dass sich ein Objekt auf einer Sichtlinie zwischen der Sonne und der geografischen Position des Kraftfahrzeuges befindet. In diesem Fall kann ermittelt werden, dass kein Eigenschatten zu erwarten ist.

Mit weiterem Vorteil kann vorgesehen sein, dass das Objekt eine Wolke, ein Fahrzeug, ein Baum oder ein Gebäude ist.

Mit weiterem Vorteil kann vorgesehen sein, dass der Sonnenstand eine Höhe und einen Horizontalwinkel umfasst.

Der Horizontalwinkel wird auch als Azimut bezeichnet.

Mit weiterem Vorteil kann vorgesehen sein, dass die Höhe und/oder der Horizontalwinkel aus der geografischen Position des Kraftfahrzeuges und/oder der Ausrichtung des Kraftfahrzeuges, und/oder eines Datums und/oder einer Uhrzeit ermittelt wird.

Bei Kenntnis der geografischen Position und/oder der Ausrichtung des Kraftfahrzeuges sowie des Datums und/oder der Uhrzeit kann anhand bekannter mathematischer Verfahren oder durch Auswertung einer Sonnenstandstabelle der Sonnenstand, insbesondere die Höhe und/oder der Horizontalwinkel der Sonne, an der geografischen Position des Kraftfahrzeuges ermittelt werden.

Mit weiterem Vorteil kann vorgesehen sein, dass die Höhe und/oder der Horizontalwinkel aus dem mindestens einen Umgebungsbild ermittelt wird.

In der Regel kann die Höhe der Sonne gut aus der ermittelten geografischen Position des Kraftfahrzeuges sowie unter Verwendung des Datums und der Uhrzeit ermittelt werden. Wenn die Ausrichtung des Kraftfahrzeuges jedoch eine größere Unsicherheit aufweist, kann der Horizontalwinkel unter Umständen nur ungenau ermittelt werden. In diesem Fall ist es von besonderem Vorteil, wenn das Umgebungsbild mittels der Auswerteeinrichtung ausgewertet wird, um den Horizontalwinkel und/oder die Höhe der Sonne zu bestimmen.

Wird beispielsweise mittels eines Bilderkennungsverfahrens die Sonne in dem mindestens einen Umgebungsbild erkannt, so kann unter Hinzuziehung der Kenntnis der Position der das Umgebungsbild erfassenden Kamera am Kraftfahrzeug die Höhe und/oder der Horizontalwinkel bestimmt werden. Wie vorstehend erläutert, kann in diesem Fall auch ermittelt werden, dass ein Eigenschatten des Kraftfahrzeuges zu erwarten ist.

Bevorzugt ist vorgesehen, dass der prognostizierte Eigenschatten eine Projektion der geometrischen Form des Kraftfahrzeuges auf eine Ebene und/oder auf eine Bodenebene ist.

Der prognostizierte Eigenschatten wird somit durch eine Projektion der bevorzugt in einem Speicher der Auswerteeinrichtung des Kraftfahrzeuges hinterlegten geometrischen Form des Kraftfahrzeuges auf eine Ebene mittels bekannter mathematischer Verfahren berechnet. Die Ebene wird dabei bevorzugt als im Wesentlichen parallel zur Bodenebene, auf der sich das Kraftfahrzeug befindet, festgelegt. Grundsätzlich ist es auch möglich, dass der prognostizierte Schatten bei Kenntnis der Geometrie des Bodens, auf dem sich das Kraftfahrzeug befindet, wie beispielsweise einer Straßenebene, als Projektion auf diese, den tatsächlichen Begebenheiten entsprechende Bodenebene berechnet wird. Hierdurch können aufgrund der geometrischen Struktur der Bodenebene auftretende Verzerrungen des Eigenschattens berücksichtigt werden.

Mit weiteren Vorteil ist vorgesehen, dass, bevorzugt geradlinige, erste Liniensegmente einer Berandung des prognostizierten Eigenschattens ermittelt werden, dass unter Verwendung der ersten Liniensegmente, bevorzugt geradlinige, zweite Liniensegmente in dem Umgebungsbild ermittelt werden, und dass die zweiten Liniensegemente einer Berandung des Eigenschattenkandidatens zugeordnet werden.

Somit kann der prognostizierte Eigenschatten als Startnäherung für die Ermittlung eines Eigenschattenkandidatens genutzt werden. Mittels eines Bilderkennungsverfahrens können Liniensegmente in dem mindestens einen Umgebungsbild erkannt werden. Wenn diese Liniensegmente eine identische oder ähnliche Position und/oder Ausrichtung wie die ersten Liniensegmente aufweisen, so werden die in dem Umgebungsbild erkannten Liniensegmente als zweite Liniensegmente einer Berandung eines Eigenschattenkandidatens bestimmt. Die ersten Liniensegmente dienen bevorzugt als erste Nährungen, um den Suchbereich für die zweiten Liniensegmente einzuschränken. Diese Vorgehensweise ist vorteilhaft, da gradlinige oder nur leicht gekrümmte Berandungen eines Schattens, das heißt die Grenze zwischen einem Schatten und dem umgebenden nicht verschatteten Bereich, mittels Bilderkennungsverfahrens leichter und sicherer erkannt werden können. Zudem wird der Berechnungsaufwand für die Ermittlung des Eigenschattenkandidatens im Umgebungsbild reduziert.

Die ersten Liniensegmente können dabei auch leicht gerundet sein und entsprechen bevorzugt im Wesentlichen gradlinigen Konturen des Kraftfahrzeuges, wie beispielsweise der Dachkontur oder der Motorhaube.

Nach Ermittlung des Eigenschattenkandidatens, wird verifiziert, ob der Eigenschattenkandidat der Eigenschatten des Kraftfahrzeuges ist. Dazu wird ein Vergleich der Position und/oder der Ausrichtung der ersten Liniensegmente des prognostizierten Eigenschattens und der zweiten Liniensegmente des Eigenschattenkandidatens durchgeführt.

Es kann auch vorgesehen sein, dass die zweiten Liniensegmente zu einer Kontur verbunden werden. Hierdurch kann eine vollständige Berandung des Eigenschattenkandidatens erhalten werden.

Durch Verbindung der zweiten Liniensegmente wird eine durchgehende Berandung des Eigenschattenkandidatens angenähert. Wenn es sich bei dem Eigenschattenkandidaten um den Eigenschatten des Kraftfahrzeuges handelt, kann durch diese Annäherung der Berandung des Eigenschattenkandidatens ein präziserer Abgleich mit den prognostizierten Eigenschatten erfolgen.

Dabei kann vorgesehen sein, dass die Verbindung der zweiten Liniensegmente auf Basis eines Helligkeitsgradienten des mindestens einen Umgebungsbilds erfolgt, und/oder dass die Verbindung der zweiten Liniensegmente auf Basis von extrapolierten Schnittpunkten der zweiten Liniensegmente erfolgt.

Die Verbindung der zweiten Liniensegmente kann auch unter Einsatz von Verfahren der künstlichen Intelligenz, wie beispielsweise angelernten neuronalen Netzen, erfolgen.

Bevorzugt ist vorgesehen, dass die geografischen Position des Kraftfahrzeuges mittels Daten eines Satellitennavigationssystems ermittelt wird, und/oder dass die geografische Ausrichtung des Kraftfahrzeuges mittels eines Drehratensensors und/oder eines Kompasses ermittelt wird.

Eine weitere Lösung der der Erfindung zugrundeliegenden Aufgabe besteht in der Bereitstellung eines Fahrerassistenzsystems für ein Kraftfahrzeug, eingerichtet zur Durchführung eines vorbeschriebenen Verfahrens.

Wird im Betrieb eines Fahrerassistenzsystems eines Kraftfahrzeuges ein vorbeschriebenes Verfahren durchgeführt, so können Fehldetektionen des Eigenschattens des Kraftfahrzeuges verringert werden.

Dabei ist bevorzugt vorgesehen, dass das Fahrerassistenzsystem ein Notbrems-Assistenzsystem oder ein autonomes Fahrsystem ist. Bevorzugt kann der ermittelte Eigenschatten für eine Beurteilung einer Verkehrssituation verworfen werden.

Wenn das Fahrerassistenzsystem ein Notbrems-Assistenzsystem oder ein autonomes Fahrsystem ist, wird das Risiko, dass der Eigenschatten aufgrund seiner Bewegung mit einem bewegten Objekt verwechselt wird, verringert. Hierdurch können kritische Verkehrssituationen im Betrieb des Fahrerassistenzsystems vermieden werden.

Mit noch weiterem Vorteil kann vorgesehen sein, dass das Fahrerassistenzsystem eine Darstellung des Kraftfahrzeuges aus einer Vogelperspektive ist, und dass der ermittelte Eigenschatten zur realistischen Darstellung des Eigenschattens in der Darstellung des Kraftfahrzeuges verwendet wird.

Die Darstellung des Kraftfahrzeuges aus einer Vogelperspektive kann auch als Topview-Darstellung bezeichnet werden und wird insbesondere zur Visualisierung in Parkassistenzsystemen eingesetzt. Der ermittelte Eigenschatten kann insbesondere dazu verwendet werden, eine realistische Kontur des ermittelten Eigenschattens in der Darstellung des Kraftfahrzeuges aus der Vogelperspektive bereitzustellen oder den Eigenschatten aus der Darstellung zu entfernen. Stitching-Effekte, welche durch Zusammenfügen verschiedener Umgebungsbilder auftreten können, können vermieden werden.

Eine noch weitere Lösung der der Erfindung zugrundeliegenden Aufgabe besteht in einem Kraftfahrzeug umfassend ein vorbeschriebenes Fahrerassistenzsystem.

Die Erfindung wird nachstehend näher anhand der beigefügten Figuren erläutert. Es zeigen:
- Fig. 1: ein Ablaufdiagramm eines Verfahrens zur Erkennung eines Eigenschattens eine Kraftfahrzeuges,
- Fig. 2: ein Kraftfahrzeug,
- Fig. 3: ein erstes Umgebungsbild,
- Fig. 4: ein zweites Umgebungsbild,
- Fig. 5: ein Kraftfahrzeug mit einer freien Sichtlinie zur Sonne,
- Fig. 6: ein Kraftfahrzeug mit bedeckten Sichtlinie zur Sonne,
- Fig. 7: ein Kraftfahrzeug mit einem Eigenschatten und einem prognostizierten Eigenschatten, und
- Fig. 8: ein Kraftfahrzeug mit einem Eigenschatten und einem prognostizierten Eigenschatten mit ermittelten Liniensegmenten.

In den Figuren sind identische oder einander entsprechende Teile mit denselben Bezugszeichen gekennzeichnet.

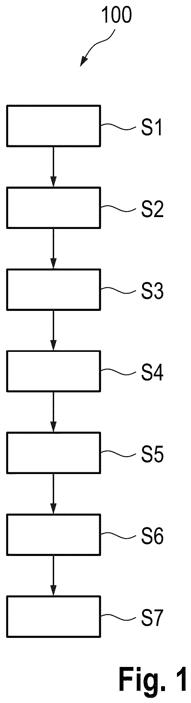

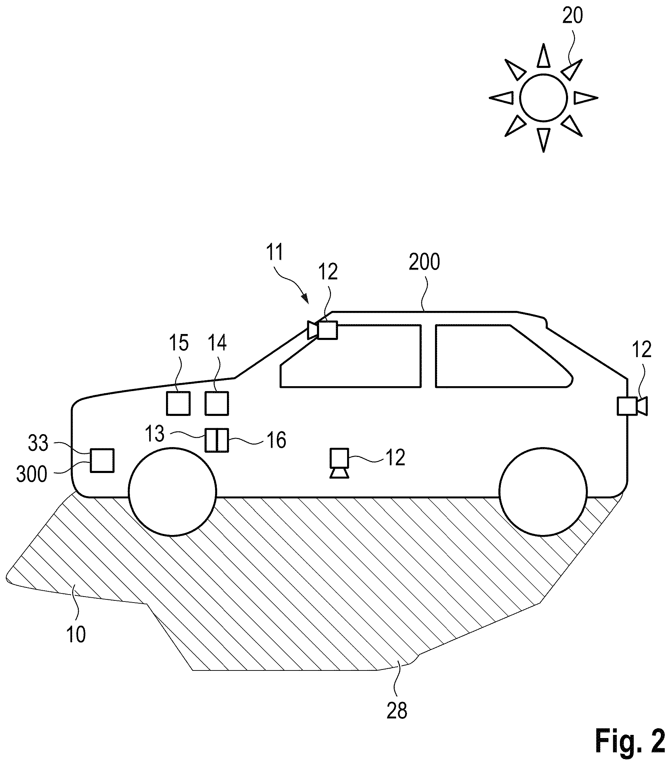

Fig. 1 zeigt ein Ablaufdiagramm für ein Verfahren 100 zur Erkennung eines Eigenschattens 10 eines Kraftfahrzeuges 200. Für die Erläuterung des Verfahrens 100 wird ferner auf die weiteren Fig. 2 bis 8 Bezug genommen.

Fig. 2 zeigt ein zur Durchführung des Verfahrens 100 ausgebildetes Kraftfahrzeug 200. Das Kraftfahrzeug 200 umfasst eine Kameraanordnung 11 mit mehreren Kameras 12. Ferner umfasst das Kraftfahrzeug 200 eine Auswerteeinrichtung 13. Auf der Auswerteeinrichtung 13 wird eine Software bzw. ein Computerprogramm zur Durchführung des Verfahrens 100 zur Erkennung eines Eigenschattens 10 ausgeführt. Das Kraftfahrzeug 200 umfasst ferner einen Empfänger 14 für ein Satellitennavigationssystem sowie einen Drehratensensor oder Kompass 15. Zudem sind in einem Speicher 16 der Auswerteeinrichtung 13 Informationen über die geometrische Form des Kraftfahrzeuges 200 abgespeichert.

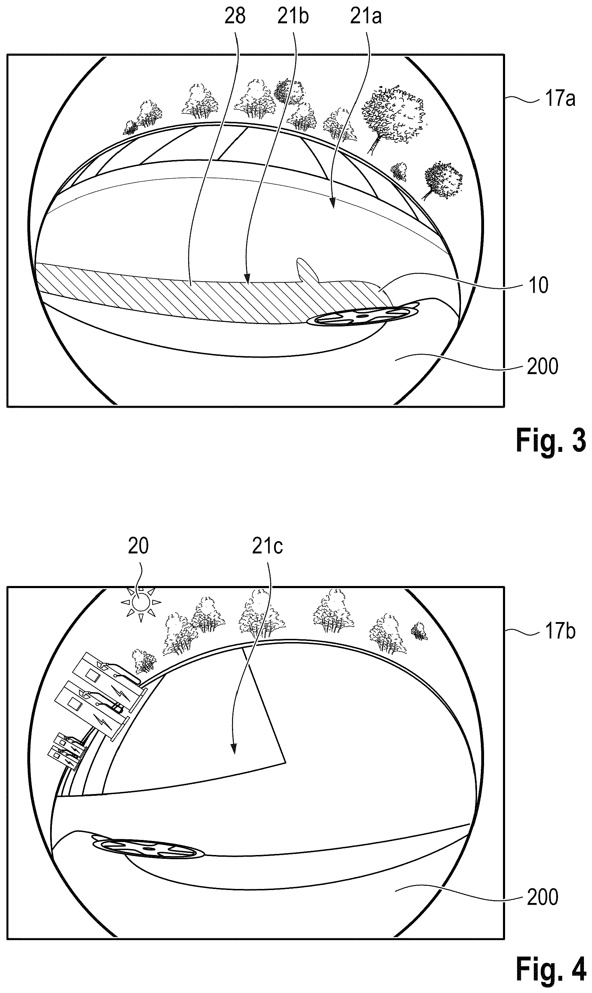

In einem ersten Verfahrensschritt S1 nach dem Ablaufdiagramm der Fig.1 wird mittels des Empfängers 14 für ein Satellitennavigationssystem eine geografische Position des Kraftfahrzeuges 200 ermittelt. Ferner wird die Ausrichtung des Kraftfahrzeuges 200 auf Basis von Daten des Kompasses 15 oder des Drehratensensors ermittelt. In einem zweiten Verfahrensschritt S2 werden Umgebungsbilder 17a, 17b mittels der Kameras 12 der Kameraanordnung 11 des Kraftfahrzeuges 200 erfasst. Fig. 3 und 4 zeigen derartige Umgebungsbilder 17a, 17b.

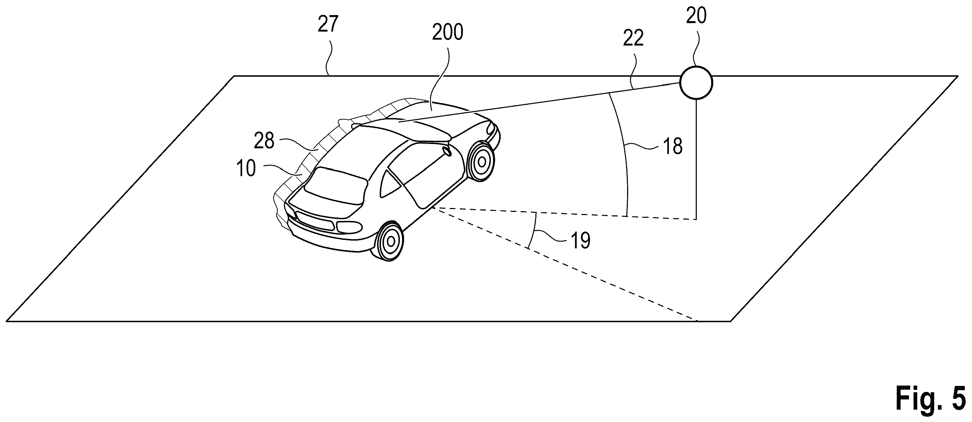

In einem dritten Verfahrensschritt S3 wird ein Sonnenstand bezüglich der geografischen Position ermittelt. Der Sonnenstand umfasst nach Fig. 5 eine Höhe 18 und einen Horizontalwinkel 19, auch Azimut genannt. Für die Ermittlung des Sonnenstandes können die mittels des Empfängers 14 für das Satellitennavigationssystem ermittelte geografische Position sowie Datum und Uhrzeit verwendet werden, um beispielsweise aus einer Tabelle oder mittels bekannter Rechenverfahren den für die geografische Position geltenden Sonnenstand zu ermitteln. Alternativ oder zusätzlich ist es auch möglich, dass die Höhe 18 und der Horizontalwinkel 19 des Sonnenstandes mittels einer direkten Erkennung der Sonne 20 in mindestens einem der Umgebungsbilder 17b (Fig. 4) ermittelt werden. Hierfür kann ein auf der Auswerteeinrichtung 13 durchgeführtes Bilderkennungsverfahren eingesetzt werden.

In einem vierten Verfahrensschritt S4 wird mittels eines auf der Auswerteeinrichtung 13 durchgeführten Bilderkennungsverfahrens aus den Umgebungsbildern 17a, 17b ermittelt, ob ein Eigenschatten 10 des Kraftfahrzeuges 200 zu erwarten ist. Dies kann zum Beispiel mittels eines Belichtungsvergleichs zwischen mehreren Bereichen 21a, 12b, 21c der Umgebungsbilder 17a, 17b durchgeführt werden. Sind starke Belichtungsunterschiede zwischen den Bereichen 21a, 21b, 21c erkennbar, kann darauf geschlossen werden, dass ein Eigenschatten 10 des Kraftfahrzeuges 200 zu erwarten ist. Alternativ oder zusätzlich kann auch ermittelt werden, dass ein Eigenschatten 10 des Kraftfahrzeuges 200 zu erwarten ist, wenn eine direkte Erkennung der Sonne 20 in mindestens einem der Umgebungsbilder 17b erfolgt.

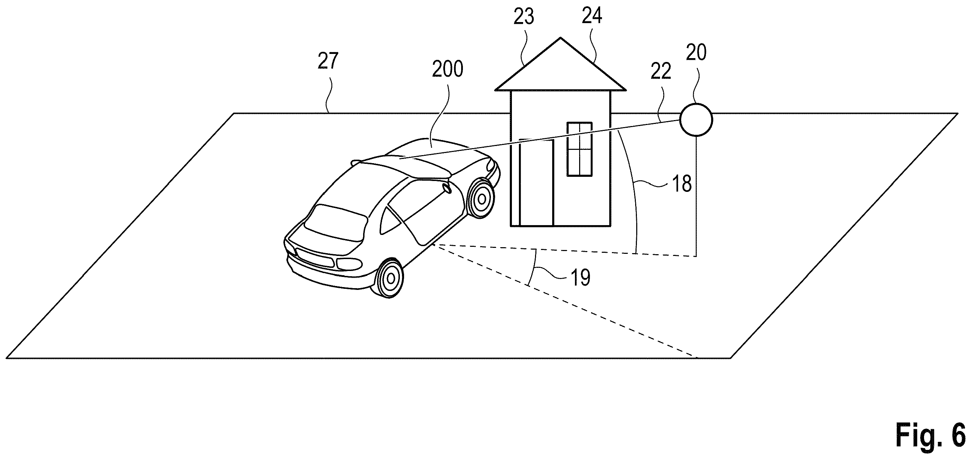

Wenn ein Eigenschatten 10 des Kraftfahrzeuges 200 zu erwarten ist, beispielsweise da die Sonne 20 in einem der Umgebungsbilder 17b erkannt wird, so besteht, wie in Fig. 5 gezeigt, eine freie Sichtlinie 22 zwischen der Sonne 20 und dem Kraftfahrzeug 200. Wird aus dem mindestens einen Umgebungsbild 17a, 17b ermittelt, dass sich ein Objekt 23, wie beispielsweise ein Gebäude 24, in der Sichtlinie 22 zwischen der Sonne 20 und dem Kraftfahrzeug 200 befindet, wie dies in Fig. 6 gezeigt ist, so ist mit keinem Eigenschatten 10 des Kraftfahrzeuges 200 zu rechnen.

In einem fünften Verfahrensschritt S5 wird mittels der Auswerteeinrichtung 13 ein prognostizierter Eigenschatten 25 des Kraftfahrzeuges 200 unter Verwendung des Sonnenstandes, der geografischen Position, der Ausrichtung des Kraftfahrzeuges 200 und von Informationen über die geometrische Form des Kraftfahrzeuges 200 berechnet. Hierfür werden bekannte mathematische Verfahren eingesetzt. Der prognostizierte Eigenschatten 25 wird dabei als Projektion der geometrischen Form des Kraftfahrzeuges 200 auf eine Ebene 26, welche der Bodenebene 27 entspricht, berechnet.

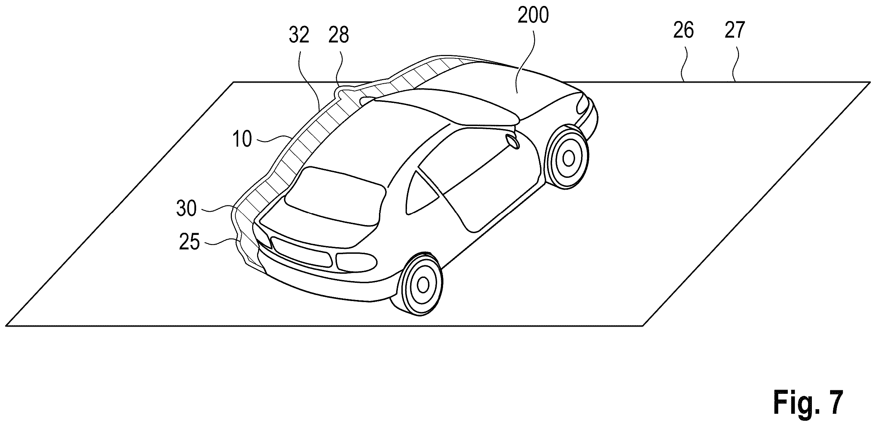

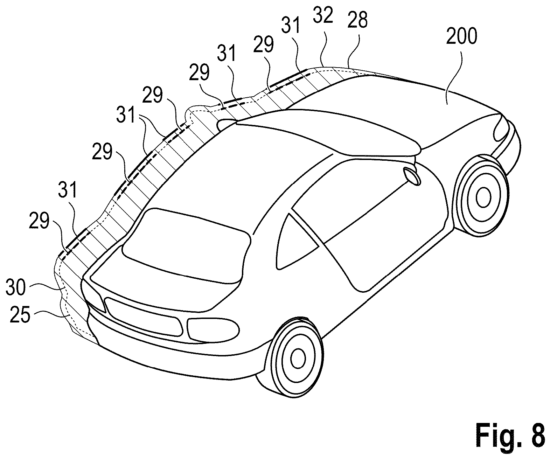

In einem sechsten Verfahrensschritt S6 wird, wenn ein Eigenschatten 10 zu erwarten ist, ein Eigenschattenkandidat 28 in dem mindestens einen Umgebungsbild 17a mittels der Auswerteeinrichtung 13 unter Verwendung des prognostizierten Eigenschattens 25 ermittelt. Zu diesem Zweck werden, wie in Fig. 7 und 8 gezeigt, gradlinige erste Liniensegmente 29 der Berandung 30 des prognostizierten Eigenschattens 25 ermittelt. Mittels eines Bilderkennungsverfahrens werden Liniensegemente in dem mindestens einen Umgebungsbild 17a gesucht. Wenn diese Liniensegmente eine identische oder ähnliche Position und/oder Ausrichtung wie die ersten Liniensegmente 29 aufweisen, so werden diese Liniensegmente als zweite Liniensegmente 31 einer Berandung 32 eines Eigenschattenkandidatens 28 bestimmt. Die ersten Liniensegmente 29 dienen somit als erste Nährungen, um den Suchbereich für die zweiten Liniensegmente 31 einzuschränken.

Es erfolgt dann in einem siebten Verfahrensschritt S7 ein Vergleich der Position und/oder der Ausrichtung der ersten Liniensegmente 29 und der zweiten Liniensegmente 31. Können jeweils erste 29 Liniensegmente den zweiten Liniensegmenten 31 zugeordnet werden, so wird ermittelt, dass der aus dem Umgebungsbild 17a ermittelte Eigenschattenkandidat 28 der Eigenschatten 10 des Kraftfahrzeuges 200 ist.

Zurückkehrend zur Fig. 2 umfasst das Kraftfahrzeug 200 ferner ein Fahrerassistenzsystem 300, welches als Notbrems-Assistenzsystem 33 ausgebildet ist, und welches Informationen zu dem mittels des Verfahrens 100 ermittelten Eigenschatten 10 verarbeitet.

### Bezugszeichenliste

- 100: Verfahren
- 200: Kraftfahrzeug
- 300: Fahrerassistenzsystem

- 10: Eigenschatten
- 11: Kameraanordnung
- 12: Kamera
- 13: Auswerteeinrichtung
- 14: Empfänger
- 15: Kompass
- 16: Speicher
- 17a: Umgebungsbild
- 17b: Umgebungsbild
- 18: Höhe
- 19: Horizontalwinkel
- 20: Sonne
- 21a: Bereich
- 21b: Bereich
- 21c: Bereich
- 22: Sichtlinie
- 23: Objekt
- 24: Gebäude
- 25: Prognostizierter Eigenschatten
- 26: Ebene
- 27: Bodenebene
- 28: Eigenschattenkandidat

- 29: Erstes Liniensegment
- 30: Berandung
- 31: Zweites Liniensegment
- 32: Berandung
- 33: Notbrems-Assistenzsystem

- S1-S7: Verfahrensschritte

## Patentansprüche

1. Verfahren (100) zur Erkennung eines Eigenschattens (10) eines Kraftfahrzeuges (200), umfassend die Schritte
- Ermitteln einer geografischen Position und einer Ausrichtung des Kraftfahrzeuges (200),
- Erfassen mindestens eines Umgebungsbildes (17a, 17b) mittels mindestens einer Kamera (12) einer Kameraanordnung (11) des Kraftfahrzeugs (200),
- Ermitteln eines Sonnenstandes bezüglich der geografischen Position,
- Ermitteln, mittels einer Auswerteeinrichtung (13), aus dem mindestens einen Umgebungsbild (17a, 17b), ob ein Eigenschatten (10) des Kraftfahrzeuges (200) zu erwarten ist,
- Berechnen, mittels der Auswerteeinrichtung (13), eines prognostizierten Eigenschattens (25) des Kraftfahrzeuges (200) unter Verwendung des Sonnenstandes, der geografischen Position und der Ausrichtung des Kraftfahrzeuges (200), und von Informationen über die geometrische Form des Kraftfahrzeuges (200),
- Ermitteln, wenn ein Eigenschatten (10) zu erwarten ist, eines Eigenschattenkandidatens (28) in dem mindestens einen Umgebungsbild (17a, 17b) mittels der Auswerteeinrichtung (13) unter Verwendung des prognostizierten Eigenschattens (25),
- Verifizieren, dass der Eigenschattenkandidat (28) der Eigenschatten (10) des Kraftfahrzeuges (200) ist, durch Vergleich des Eigenschattenkandidatens (28) mit dem prognostizierten Eigenschatten (25) mittels der Auswerteeinrichtung (13).

2. Verfahren (100) nach Anspruch 1, wobei zur Ermittlung, ob ein Eigenschatten (10) zu erwarten ist, ein Belichtungsvergleich zwischen mehreren Bereichen (21a, 21b, 21c) des mindestens einen Umgebungsbildes (17a, 17b) und/oder zwischen mehreren Umgebungsbildern (17a, 17b) durchgeführt wird, und/oder, wobei ein Eigenschatten (10) zu erwarten ist, wenn aus dem mindestens einen Umgebungsbild (17a, 17b) ermittelt wird, dass sich kein Objekt (23) auf einer Sichtlinie (22) zwischen der Sonne (20) und der geografischen Position des Kraftfahrzeuges (200) befindet, und/oder wobei kein Eigenschatten (10) zu erwarten ist, wenn aus dem mindestens einen Umgebungsbild (17a, 17b) ermittelt wird, dass sich ein Objekt (23) auf einer Sichtlinie (22) zwischen der Sonne (20) und der geografischen Position des Kraftfahrzeuges (200) befindet.

3. Verfahren (100) nach Anspruch 2, **dadurch gekennzeichnet, dass** das Objekt (23) eine Wolke, ein Fahrzeug, ein Baum oder ein Gebäude (24) ist.

4. Verfahren (100) nach einem der vorgenannten Ansprüche, **dadurch gekennzeichnet, dass** der Sonnenstand eine Höhe (18) und einen Horizontalwinkel (19) umfasst, wobei bevorzugt die Höhe (18) und/oder der Horizontalwinkel (19) aus der geografischen Position des Kraftfahrzeuges (200) und/oder der Ausrichtung des Kraftfahrzeuges (200), und/oder eines Datums und/oder einer Uhrzeit ermittelt wird, und/oder wobei bevorzugt die Höhe (18) und/oder der Horizontalwinkel (19) aus dem mindestens einen Umgebungsbild (17a, 17b) ermittelt wird.

5. Verfahren (100) nach einem der vorgenannten Ansprüche, **dadurch gekennzeichnet, dass** der prognostizierte Eigenschatten (25) eine Projektion der geometrischen Form des Kraftfahrzeuges (200) auf eine Ebene (26) und/oder auf eine Bodenebene (27) ist.

6. Verfahren (100) nach einem der vorgenannten Ansprüche, **dadurch gekennzeichnet, dass**, bevorzugt geradlinige, erste Liniensegmente (29) einer Berandung (30) des prognostizierten Eigenschattens (25) ermittelt werden, dass unter Verwendung der ersten Liniensegmente (29), bevorzugt geradlinige, zweite Liniensegmente (31) in dem Umgebungsbild (17a, 17b) ermittelt werden, dass die zweiten Liniensegemente (31) einer Berandung (32) des Eigenschattenkandidatens (28) zugeordnet werden.

7. Verfahren (100) nach Anspruch 6, **dadurch gekennzeichnet, dass** die zweiten Liniensegmente (31) zu einer Kontur verbunden werden, wobei bevorzugt die Verbindung der zweiten Liniensegmente (31) auf Basis eines Helligkeitsgradienten des mindestens einen Umgebungsbildes (17a, 17b) erfolgt, und/oder wobei bevorzugt die Verbindung der zweiten Liniensegmente (31) auf Basis von extrapolierten Schnittpunkten der zweiten Liniensegmente (31) erfolgt.

8. Verfahren (100) nach einem der vorgenannten Ansprüche, **dadurch gekennzeichnet, dass** die geografische Position des Kraftfahrzeuges (200) mittels Daten eines Satellitennavigationssystems ermittelt wird, und/oder dass die geografische Ausrichtung des Kraftfahrzeuges (200) mittels eines Drehratensensors und/oder eines Kompasses (15) ermittelt wird.

9. Fahrerassistenzsystem (300) für ein Kraftfahrzeug (200), eingerichtet zur Durchführung eines Verfahrens (100) nach einem der vorgenannten Ansprüche.

10. Kraftfahrzeug (200) umfassend ein Fahrerassistenzsystem (300) nach Anspruch 9.
